# EUROPEAN PATENT APPLICATION

(11) **EP 4 773 687 A1**
(43) Date of publication of application: **08.07.2026**
(21) Application number: 24869873.0
(22) Date of filing: 20.06.2024
(51) Int. Cl.: H04W 52/14

(54) **POWER INFORMATION REPORTING METHOD AND APPARATUS, AND COMMUNICATION NODE AND STORAGE MEDIUM**

(30) Priority: 26.09.2023 CN 202311274698
(71) Applicant: ZTE Corporation, Shenzhen, Guangdong 518057 (CN)
(72) Inventor: LIU, Wenhao, Shenzhen, Guangdong 518057 (CN); XUE, Fei, Shenzhen, Guangdong 518057 (CN); ZHOU, Wubin, Shenzhen, Guangdong 518057 (CN); ZHANG, Chenchen, Shenzhen, Guangdong 518057 (CN); HAO, Peng, Shenzhen, Guangdong 518057 (CN)
(74) Representative: Aipex B.V.
(86) International application number: PCT/CN2024/100276
(87) International publication number: WO 2025/066312

(57) **Abstract**

Provided are a power information reporting method and apparatus, a communication node, and a storage medium. The method includes that a first node sends report information to a second node. The report information includes first power information of different transmission parameters. The first power information includes at least one of PHR information or MPR information. The first node reports at least one of PHR information or MPR information of different transmission parameters to the second node, fully considering the influence of the different transmission parameters on the PHR information and the MPR information so that the second node can configure more appropriate power for the first node to perform data transmission, thereby improving the transmission efficiency or transmission rate of the first node.

## Description

### TECHNICAL FIELD

The present application relates to the field of mobile communication technology, particularly a power information reporting method and apparatus, a communication node, and a storage medium.

### BACKGROUND

In a wireless communication network, a terminal device reports power headroom report (PHR) information to a network to assist the network in performing uplink power control and uplink scheduling. However, the terminal device reports the PHR in a conservative manner, that is, reports a whole PHR. As a result, the network schedules a conservative transmission power for the terminal device to perform data transmission, thereby reducing the transmission efficiency or transmission rate of the terminal device.

### SUMMARY

Embodiments of the present application provide a power information reporting method and apparatus, a communication node, and a storage medium.

In a first aspect, embodiments of the present application provide a power information reporting method. The method includes that a first node sends report information to a second node. The report information includes first power information of different transmission parameters. The first power information includes at least one of PHR information or MPR information.

In a second aspect, embodiments of the present application provide a power information reporting method. The method includes that a second node receives report information from a first node. The report information includes first power information of different transmission parameters. The first power information includes at least one of PHR information or MPR information.

In a third aspect, embodiments of the present application provide a power information reporting apparatus. The apparatus includes a sending module configured to send report information to a second node. The report information includes first power information of different transmission parameters. The first power information includes at least one of PHR information or MPR information.

In a fourth aspect, embodiments of the present application provide a power information reporting apparatus. The apparatus includes a receiving module configured to receive report information from a first node. The report information includes first power information of different transmission parameters. The first power information includes at least one of PHR information or MPR information.

In a fifth aspect, embodiments of the present application provide a communication node. The communication node includes a memory and a processor. The memory is configured to store a computer program which, when executed by the processor, causes the processor to perform the power information reporting method of the first aspect and the second aspect.

In a sixth aspect, embodiments of the present application provide a storage medium storing a computer program which, when executed by a processor, causes the processor to perform the power information reporting method of the first aspect and the second aspect.

In solutions of embodiments of the present application, the first node reports at least one of PHR information or MPR information of different transmission parameters to the second node, fully considering the influence of the different transmission parameters on the PHR information and the MPR information so that the second node can configure more appropriate power for the first node to perform data transmission, thereby improving the transmission efficiency or transmission rate of the first node.

### BRIEF DESCRIPTION OF DRAWINGS

FIG. 1 is a diagram illustrating the structure of a communication system to which a power information reporting method is applicable according to embodiments of the present application.
FIG. 2 is a flowchart of a power information reporting method according to embodiments of the present application.
FIG. 3A is a diagram illustrating PHR information corresponding to different modulation orders according to embodiments of the present application.
FIG. 3B is a diagram illustrating MPR information corresponding to different modulation orders according to embodiments of the present application.
FIG. 4A is a diagram illustrating PHR information corresponding to different transmission waveforms according to embodiments of the present application.
FIG. 4B is a diagram illustrating MPR information corresponding to different transmission waveforms according to embodiments of the present application.
FIG. 5A is a diagram illustrating PHR information corresponding to different resource allocation schemes according to embodiments of the present application.
FIG. 5B is a diagram illustrating MPR information corresponding to different resource allocation schemes according to embodiments of the present application.
FIG. 6 is a diagram illustrating the reporting format of PHR information corresponding to different modulation orders according to embodiments of the present application.
FIG. 7 is a flowchart of a power information reporting method according to embodiments of the present application.
FIG. 8 is a diagram illustrating the structure of a power information reporting apparatus according to embodiments of the present application.
FIG. 9 is a diagram illustrating the structure of a power information reporting apparatus according to embodiments of the present application.
FIG. 10 is a diagram illustrating the structure of a communication node according to embodiments of the present application.

### DETAILED DESCRIPTION

It is to be understood that embodiments described herein are only intended to explain the present application and are not intended to limit the present application. The embodiments of the present application are described hereinafter in detail in conjunction with the drawings.

The power information reporting method of any embodiment of the present application is applicable to various wireless communication systems, for example, a long-term evolution (LTE) system, a 4th-generation (4G) system, a 5th-generation (5G) system, an LTE-5G hybrid architecture system, a 5G New Radio (NR) system, and new communication systems such as a 6th-generation (6G) system in future communications.

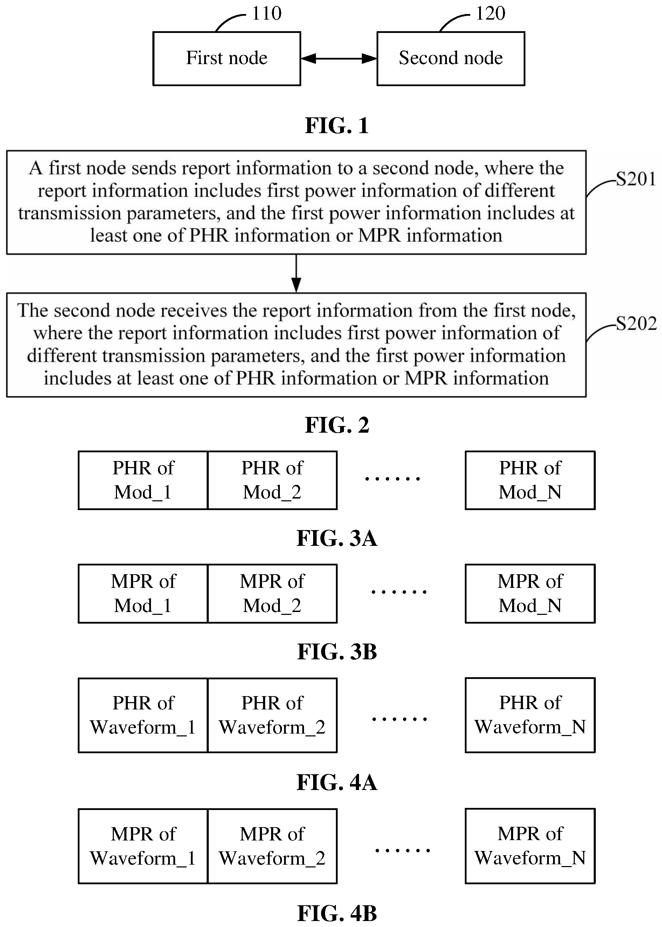

By way of example, the communication system 100 to which embodiments of the present application are applied is as shown in FIG. 1. The communication system 100 may include a first node 110 and a second node 120. The first node 110 may be a user equipment (UE) or an intermediate node that performs a relay function. The second node 120 may be a base station (BS) or a relay node that performs a relay function. The base station may include an evolved NodeB (eNB or eNodeB) in Long Term Evolution Advanced (LTE-A), a transmission-reception point (TRP), a base station or a gNB in a 5G mobile communication system, a base station in a future mobile communication system, or an access node in a Wireless Fidelity (Wi-Fi) system. The base station may be, for example, a macro base station, a micro base station, a home base station, a wireless remote station, a router, a Wi-Fi device, a primary-cell device, a secondary-cell device, another network device, or a location management function (LMF) device. The access network device 120 may also be a module or unit for implementing some functions of the base station, for example, a central unit (CU) or a distributed unit (DU). It is to be noted that the forms of the first node 110 and the second node 120 are not limited in embodiments of the present application.

FIG. 2 is a flowchart of a power information reporting method according to embodiments of the present application. As shown in FIG. 2, the method may include the following:
In S201, a first node sends report information to a second node. The report information includes first power information of different transmission parameters. The first power information includes at least one of PHR information or MPR information.

In S202, the second node receives the report information from the first node. The report information includes first power information of different transmission parameters. The first power information includes at least one of PHR information or MPR information.

Optionally, the different transmission parameters include at least one of the following: different modulation orders, different transmission waveforms, or different resource allocation schemes.

Different modulation orders may include a complete set of all modulation orders or a subset of all modulation orders. For example, the complete set of modulation orders may be {binary phase-shift keying (BPSK), quadrature phase-shift keying (QPSK), 16-quadrature amplitude modulation (16QAM), 64QAM, 256QAM, 1024QAM}. A portion of the complete set may be selected for reporting, for example {64QAM, 256QAM, 1024QAM}.

Different transmission waveforms may include a complete set of all transmission waveforms or a subset of the complete set of transmission waveforms. For example, the complete set of transmission waveforms may be {time-division multiple access (TDMA), code-division multiple access (CDMA), cyclic prefix orthogonal frequency-division multiplexing (CP-OFDM), discrete Fourier transform-spread orthogonal frequency division multiplexing (DFT-s-OFDM), filtered-OFDM, index modulation (IM), Orthogonal Time Frequency Space (OTFS)}. A portion of the complete set of transmission waveforms may be selected for reporting.

Optionally, the different resource allocation schemes are classified according to at least one of the following: the continuity of resource allocation, the number of allocated resources, the position of resource allocation, or the bandwidth size of resource allocation.

Classifying the resource allocation schemes according to the continuity of resource allocation refers to that resource allocation may be continuous or non-continuous. For example, a continuous resource allocation scheme may be one scheme, while a non-continuous resource allocation scheme may be another scheme.

The number of resources may refer to the number of allocated resource blocks (RBs) or subcarriers (SCs). Classifying the resource allocation schemes according to the number of allocated resources may be as follows: When the number of allocated RBs is less than N_RB, the allocation belongs to one resource allocation scheme; and when the number of allocated RBs is greater than or equal to N_RB, the allocation belongs to another resource allocation scheme. Alternatively, when the number of allocated SCs is less than N_SC, the allocation belongs to one resource allocation scheme; and when the number of allocated SCs is greater than or equal to N_SC, the allocation belongs to another resource allocation scheme. N_RB and N_SC are natural numbers greater than or equal to 1.

Classifying the resource allocation schemes according to the position of resource allocation may include at least one of the following:
The location of resource allocation is classified into: a location near a Direct Current (DC) subcarrier, a location far from the DC subcarrier, a location including the DC subcarrier, in an inner bandwidth region, in an outer bandwidth region, or in a bandwidth edge region. That is, when the location of resource allocation is the location near the DC subcarrier, the allocation belongs to one resource allocation scheme; when the location of resource allocation is the location far from the DC subcarrier, the allocation belongs to another scheme; when the location of resource allocation includes the location including the DC subcarrier, the allocation belongs to another scheme; when the location of resource allocation is in the inner bandwidth region, the allocation belongs to another scheme; when the location of resource allocation is in the outer bandwidth region, the allocation belongs to another scheme; and when the location of resource allocation is in the bandwidth edge region, the allocation belongs to another scheme.

When the interval between the RB or SC that is closest to the DC position among the allocated RBs or SCs and the DC position is less than or equal to N_gap RBs or SCs, the resource allocation scheme is considered to be a "close to the DC position" scheme. When the interval between the RB or SC that is closest to the DC position among the allocated RBs or SCs and the DC position is greater than N_gap RBs or SCs, the resource allocation scheme is considered to be a "far from the DC position" scheme. When the allocated RBs or SCs include the DC position, the resource allocation scheme is considered to a "including the DC position" scheme. N_gap is a natural number greater than or equal to 1.

According to the start position and length of the allocated bandwidth, it can be determined whether the position of resource allocation is the inner bandwidth region, the outer bandwidth region, or the bandwidth edge region, thereby determining different resource allocation schemes.

The resource allocation schemes are classified according to the bandwidth size or the bandwidth span. For continuous resource allocation, the bandwidth span corresponds to the number of allocated resources, while for non-continuous resource allocation, the bandwidth span corresponds to the bandwidth span between the start position and the end position.

In summary, the first node may report the first power information to the second node in at least one of the following manners:
As shown in FIG. 3A and FIG. 3B, the first node reports PHR information and/or MPR information corresponding to one or more modulation orders. Mod_1, Mod_2, ..., Mod_N represent different modulation orders. Each of these modulation orders may be a modulation order selected from the set {BPSK, QPSK, 16QAM, 64QAM, 256QAM, 1024QAM}. N is a natural number greater than or equal to 1.

As shown in FIG. 4A and FIG. 4B, the first node reports PHR information and/or MPR information corresponding to one or more transmission waveforms. Waveform_1, Waveform_2, ..., Waveform_N represent different transmission waveforms. Each of these transmission waveforms may be a waveform selected from the waveform set {TDMA, CDMA, CP-OFDM, DFT-s-OFDM, filtered-OFDM, IM, OTFS}.

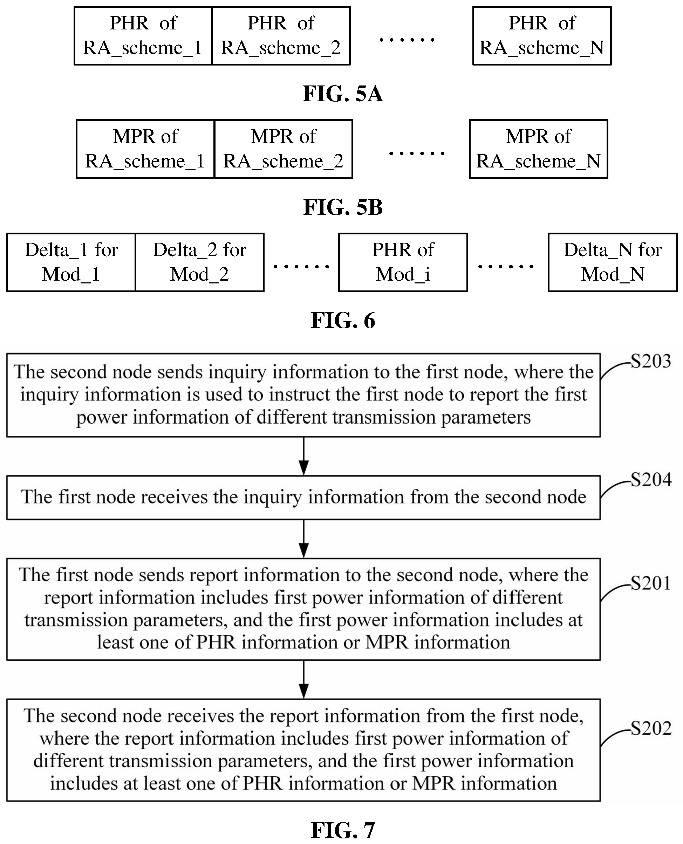

As shown in FIG. 5A and FIG. 5B, the first node reports PHR information and/or MPR information corresponding to one or more resource allocation schemes. RA_scheme_1, RA_scheme_2, ..., RA_scheme_N represent different resource allocation schemes as described above.

In this embodiment, the first node reports at least one of PHR information or MPR information of different transmission parameters to the second node, fully considering the influence of the different transmission parameters on the PHR information and the MPR information so that the second node can configure more appropriate power for the first node to perform data transmission, thereby improving the transmission efficiency or transmission rate of the first node.

Optionally, different transmission parameters that correspond to the first power information to be reported and that are included in the report information and the reporting order of the first power information of the different transmission parameters in the report information may be pre-agreed, indicated by the second node, or notified by the first node to the second node.

Specifically, whether the first node reports first power information corresponding to modulation orders, transmission waveforms, or resource allocation schemes as well as which modulation orders, transmission waveforms, or resource allocation schemes are to be reported may be pre-agreed, indicated by the second node, or notified by the first node to the second node. Optionally, the second node may request the first power information corresponding to one or more modulation orders from the first node, may request the first power information corresponding to one or more transmission waveforms from the first node, or may request the first power information corresponding to one or more resource allocation schemes from the first node. Optionally, the second node may also indicate the reporting order of one or more transmission parameters in the report information. For example, the second node requests the PHR information and the MPR information corresponding to BPSK, QPSK, 16QAM, 64QAM, 256QAM, and 1024QAM and instructs the first node to report the PHR information and the MPR information according to the magnitude of the modulation orders. In this manner, the first node reports the PHR information and the MPR information corresponding to BPSK, QPSK, 16QAM, 64QAM, 256QAM, and 1024QAM to the second node according to the magnitude of the modulation orders.

Optionally, when the first node sends the first power information corresponding to one or more modulation orders to the second node, the first node may indicate the reporting order of the one or more modulation orders in the report information through additional field information. Similarly, when the first node sends the first power information corresponding to one or more transmission waveforms or resource allocation schemes, the first node may indicate the reporting order of the transmission waveforms or resource allocation schemes through additional field information. In this manner, the second node can parse the report information based on the reporting order to obtain the first power information corresponding to the transmission parameters.

In an embodiment, the first power information may be reported in one of the following forms: the absolute power values of the different transmission parameters; the absolute power value of the current transmission parameter and the power offsets of other transmission parameters relative to the current transmission parameter; or the power offsets of the different transmission parameters relative to second power information, where the second power information includes at least one of the following: the PHR information or the MPR information of the first node.

Specifically, the first node may directly report absolute power values of different transmission parameters to the second node. In another optional embodiment, the first node may report the absolute PHR or MPR value of the current transmission parameter, while the reported values of other transmission parameters are relative values relative to the PHR or MPR of the current transmission parameter. The current transmission parameter refers to the transmission parameter for carrying the PHR or the MPR or the transmission parameter for carrying service data that is closest to the PHR or MPR reporting.

Using the reporting of PHR information corresponding to different modulation orders as an example, the first node reports the PHR corresponding to one or more modulation orders. The PHR corresponding to the current modulation order is an absolute value, and the reported values corresponding to other modulation orders are relative values relative to the current modulation order. If the modulation order used by the first node before the reporting or in the current reporting is Mod_i, the first node reports the absolute PHR value corresponding to the modulation order Mod_i and reports the PHR relative offsets of other modulation orders relative to the modulation order Mod_i. As shown in FIG. 6, if the PHR corresponding to the modulation order Mod_i is x dB, the first node reports that the change in the PHR of modulation order Mod _1 relative to the PHR of modulation order Mod_i is delta_1 dB. This indicates that when the first node transmits using modulation order Mod_i, the power headroom of the first node is x dB, and when the first node transmits using modulation order Mod_1, the power headroom of the first node is x + delta_1 dB. Mod_1, Mod_2, ..., Mod_N each represent one modulation order selected from {BPSK, QPSK, 16QAM, 64QAM, 256QAM, 1024QAM}. N is a natural number greater than or equal to 1.

Optionally, Mod_1, Mod_2, ..., Mod_N are arranged according to the magnitude of the modulation orders.

Optionally, the current modulation order may be ranked first, followed by higher modulation orders in sequence until the highest modulation order, and then the lowest modulation order, the second lowest modulation order, and so on.

Optionally, the reporting order of the first power information corresponding to different modulation orders in the report information is an order agreed or negotiated through signaling between the first node and the second node or is notified by the first node to the second node.

Similarly, the reporting of the first power information corresponding to different transmission waveforms and different resource allocation schemes may also use the preceding mode of absolute values plus offsets.

In another optional embodiment, the first node may report second power information to the second node. The second power information includes the PHR information and/or the MPR information of the first node, that is, the second power information does not take into account the influence of different transmission parameters. Meanwhile, the first node may also report power offsets of different transmission parameters relative to the second power information. Using the reporting of PHR information corresponding to different modulation orders as an example, the first node reports PHR offsets of one or more modulation orders relative to the PHR information of the first node to the second node. For example, the first node reports a power headroom value alpha representing the power headroom and may also report PHR offsets {delta 1, delta_2, ..., delta_N} corresponding to the one or more modulation orders relative to alpha. delta_1, delta_2, ..., delta_N correspond one-to-one to offsets of the modulation orders relative to alpha. The reported alpha and delta_1, delta_2, ..., delta_N may be linear values or dB values. If the reported information is in dB, delta_1 indicates that the power headroom corresponding to the modulation order is alpha + delta_1 dB. If the reported information is a linear value, delta_1 indicates that the power headroom corresponding to the modulation order is alpha + delta_1 W or mW.

Similarly, the first node reports the PHR or the MPR of the first node to the second node and notifies the second node of the PHR offsets or the MPR offsets of one or more transmission waveforms relative to the second power information of the first node. The meaning and the unit of the reported information are not repeated here.

Similarly, the first node reports the PHR or the MPR of the first node to the second node and notifies the second node of the PHR offsets or the MPR offsets of one or more resource allocation schemes relative to the second power information of the first node. The meaning and the unit of the reported information are not repeated here. In an embodiment, as shown in FIG. 7, the method also includes the following:
In S203, the second node sends inquiry information to the first node. The inquiry information is used to instruct the first node to report the first power information of different transmission parameters.

In S204, the first node receives the inquiry information from the second node.

Optionally, the second node instructs, through the inquiry information, the first node to report at least one of the following: PHR information corresponding to one or more modulation orders, MPR information corresponding to one or more modulation orders, PHR information corresponding to one or more transmission waveforms, MPR information corresponding to one or more transmission waveforms, PHR information corresponding to one or more resource allocation schemes, or MPR information corresponding to one or more resource allocation schemes.

Optionally, the inquiry information includes first information and second information. The first information is used to instruct the first node to report the first power information according to the different transmission parameters. The second information is used to indicate the reporting mode of the first power information. Optionally, the reporting mode of the first power information includes at least one of the following: reporting the transmission parameters corresponding to the first power information that is to be reported and the reporting order of the first power information in the report information.

For example, the reporting mode of the first information may be indicated by characters indicating that the first power information is reported according to different transmission parameters. For example, some characters may indicate that the first power information is reported according to modulation orders, some characters may indicate that the first power information is reported according to transmission waveforms, and some characters may indicate that the first power information is reported according to resource allocation schemes. The second information indicates transmission parameters whose first power information is to be reported and the reporting order of the first power information corresponding to the transmission parameters in the report information. In an example in which the first power information is reported according to modulation orders, the second node instructs, through the first information, the first node to report the PHR or the MPR according to modulation orders, instructs, through the second information, the first node to report the PHR or the MPR corresponding to the modulation orders {BPSK, QPSK, 16QAM, 64QAM, 256QAM, 1024QAM}, and instructs the first node to report the first power information according to the magnitude of the modulation orders.

Optionally, the first information is carried by a medium access control-control element (MAC-CE), downlink control information (DCI), or uplink control information (UCI); and the second information is carried by radio resource control (RRC) or a MAC-CE.

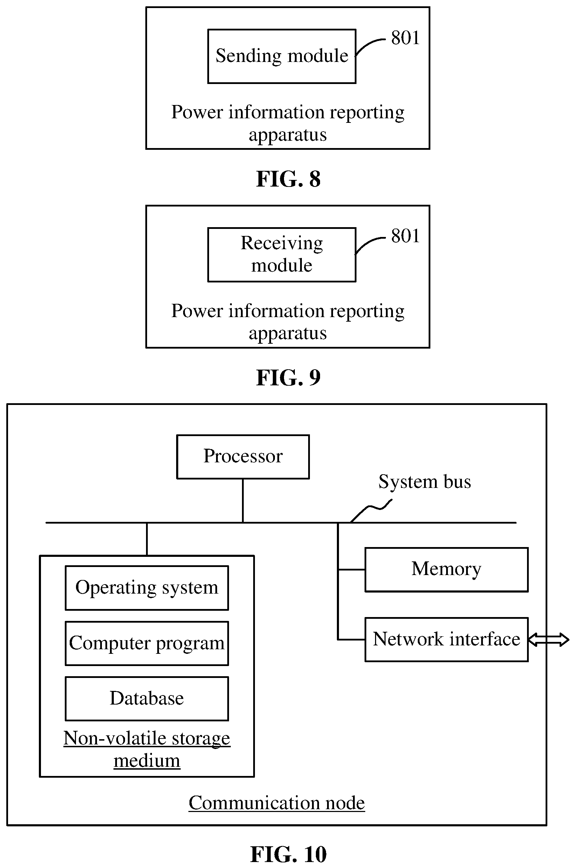

FIG. 8 is a diagram illustrating the structure of a power information reporting apparatus according to embodiments of the present application. As shown in FIG. 8, the apparatus may include a sending module 801.

Specifically, the sending module 801 is configured to send report information to a second node. The report information includes first power information of different transmission parameters. The first power information includes at least one of PHR information or MPR information.

Optionally, the different transmission parameters include at least one of the following: different modulation orders, different transmission waveforms, or different resource allocation schemes.

Optionally, the different resource allocation schemes are classified according to at least one of the following: the continuity of resource allocation, the number of allocated resources, the position of resource allocation, or the bandwidth size of resource allocation.

Optionally, the first power information is one of the following: the absolute power values of the different transmission parameters; the absolute power value of the current transmission parameter and the power offsets of other transmission parameters relative to the current transmission parameter; or the power offsets of the different transmission parameters relative to second power information, where the second power information includes at least one of the following: the PHR information or the MPR information of the first node.

Optionally, the reporting order of the first power information of the different transmission parameters in the report information is pre-agreed, indicated by the second node, or notified by the first node to the second node.

Based on the previous embodiments, optionally, the apparatus also includes a receiving module.

Specifically, the receiving module is configured to receive inquiry information from the second node. The inquiry information is used to instruct the first node to report the first power information.

Optionally, the inquiry information includes first information and second information. The first information is used to instruct the first node to report the first power information according to the different transmission parameters. The second information is used to indicate the reporting mode of the first power information.

Optionally, the reporting mode of the first power information includes at least one of the following: reporting the transmission parameters corresponding to the first power information and the reporting order of the first power information in the report information.

FIG. 9 is a diagram illustrating the structure of a power information reporting apparatus according to embodiments of the present application. As shown in FIG. 9, the apparatus may include a receiving module 901.

Specifically, the receiving module 901 is configured to receive report information from a first node. The report information includes first power information of different transmission parameters. The first power information includes at least one of PHR information or MPR information.

Optionally, the different transmission parameters include at least one of the following: different modulation orders, different transmission waveforms, or different resource allocation schemes.

Optionally, the different resource allocation schemes are classified according to at least one of the following: the continuity of resource allocation, the number of allocated resources, the position of resource allocation, or the bandwidth size of resource allocation.

Based on the previous embodiments, optionally, the apparatus also includes a sending module.

Specifically, the sending module is configured to send inquiry information to the first node. The inquiry information is used to instruct the first node to report the first power information.

Optionally, the inquiry information includes first information and second information. The first information is used to instruct the first node to report the first power information according to the different transmission parameters. The second information is used to indicate the reporting mode of the first power information.

Optionally, the reporting mode of the first power information includes at least one of the following: reporting the transmission parameters corresponding to the first power information and the reporting order of the first power information in the report information.

Optionally, the first information is carried by a medium access control-control element (MAC-CE), downlink control information (DCI), or uplink control information (UCI); and the second information is carried by radio resource control (RRC) or a MAC-CE.

In an embodiment, a communication node is provided. The internal structure of the communication node may be as shown in FIG. 9. The communication node includes a processor, a memory, a network interface, and a database connected via a system bus. The processor of the communication node is used for providing computing and control capabilities. The memory of the communication node includes a non-volatile storage medium and an internal memory. The non-volatile storage medium stores an operating system, a computer program, and a database. The internal memory provides an environment for the operation of the operating system and the computer program in the non-volatile storage medium. The database of the communication node is used for storing data generated during power information reporting. The network interface of the communication node is used for communicating with an external terminal via a network connection. When executed by the processor, the computer program causes the processor to perform a power information reporting method. The communication node may be the first communication node 110 or the second communication node 120 of any previous embodiment.

It is to be understood by those skilled in the art that the structure shown in FIG. 9 is a block diagram of some structures related to the solution of the present application and does not limit the communication node to which the solution of the present application is applied. The specific communication node may include more or fewer components than the components shown in the figure, may include a combination of some of the components shown in the figure, or may have a different arrangement of the components shown in the figure.

Embodiments of the present application also provide a computer-readable storage medium storing a computer program which, when executed by a processor, causes the processor to perform the following:

A first node sends report information to a second node. The report information includes first power information of different transmission parameters. The first power information includes at least one of PHR information or MPR information.

Embodiments of the present application also provide a computer-readable storage medium storing a computer program which, when executed by a processor, causes the processor to perform the following:

A second node receives report information from a first node. The report information includes first power information of different transmission parameters. The first power information includes at least one of PHR information or MPR information.

A computer storage medium according to the embodiments of the present application may be one computer-readable medium or any combination of multiple computer-readable media. The computer-readable medium may be a computer-readable signal medium or a computer-readable storage medium. For example, the computer-readable storage medium may be, but is not limited to, an electrical, magnetic, optical, electromagnetic, infrared, or semiconductor system, apparatus, or device or any combination thereof. The computer-readable storage medium includes (a non-exhaustive list) an electrical connection having one or more wires, a portable computer disk, a hard disk, a random access memory (RAM), a read-only memory (ROM), an electrically erasable programmable read-only memory (EEPROM), a flash memory, an optical fiber, a portable compact disk read-only memory (CD-ROM), an optical memory, a magnetic memory, or any suitable combination thereof. In the present application, the computer-readable storage medium may be any tangible medium including or storing a program. The program may be used by or used in conjunction with an instruction execution system, apparatus, or device.

The computer-readable signal medium may include a data signal propagated in a baseband or as part of a carrier. The data signal carries computer-readable program codes. The data signal propagated in this manner may be in multiple forms and includes, but is not limited to, an electromagnetic signal, an optical signal, or any appropriate combination thereof. The computer-readable signal medium may be any computer-readable medium other than the computer-readable storage medium. The computer-readable medium may send, propagate, or transmit a program used by or used in conjunction with an instruction execution system, apparatus, or device.

Program codes included in the computer-readable medium may be transmitted by using any appropriate medium including, but not limited to, a wireless medium, a wire, an optical cable, a radio frequency (RF), or any appropriate combination thereof.

Computer program codes for performing operations of the present disclosure may be written in one or more programming languages or a combination of multiple programming languages. The programming languages include object-oriented programming languages (such as Java, Smalltalk, C++, Ruby, and Go) and conventional procedural programming languages (such as "C" or similar programming languages). Program codes may be executed entirely on a user computer, executed partly on a user computer, executed as a standalone software package, executed partly on a user computer and partly on a remote computer, or executed entirely on a remote computer or a server. In the case where the remote computer is involved, the remote computer may be connected to the user computer via any type of network (including a local area network (LAN) or a wide area network (WAN)) or may be connected to an external computer (for example, via the Internet provided by an Internet service provider).

It is to be understood by those skilled in the art that the term "user equipment" encompasses any appropriate type of wireless user device, such as a mobile phone, a portable data processing apparatus, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type appropriate for a local technical environment and may be implemented using any appropriate data storage technology, such as, but not limited to, a read-only memory (ROM), a random-access memory (RAM), or an optical memory apparatus and system (for example, a digital video disc (DVD) or a compact disc (CD)). Computer-readable media may include non-transitory storage media. The data processor may be of any type appropriate for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

## Claims

1. A power information reporting method, comprising:
sending, by a first node, report information to a second node, wherein the report information comprises first power information of different transmission parameters, and the first power information comprises at least one of the following: power headroom report, PHR, information or maximum power reduction, MPR, information.

2. The method of claim 1, wherein the different transmission parameters comprise at least one of the following:
different modulation orders, different transmission waveforms, or different resource allocation schemes.

3. The method of claim 2, wherein the different resource allocation schemes are classified according to at least one of the following:
continuity of resource allocation, a number of allocated resources, a position of resource allocation, or a bandwidth size of resource allocation.

4. The method of claim 1, wherein the first power information is one of the following:
absolute power values of the different transmission parameters;
an absolute power value of a current transmission parameter and power offsets of other transmission parameters relative to the current transmission parameter; or
power offsets of the different transmission parameters relative to second power information, wherein the second power information comprises at least one of the following: the PHR information or the MPR information of the first node.

5. The method of claim 1, wherein a reporting order of the first power information of the different transmission parameters in the report information is pre-agreed, indicated by the second node, or notified by the first node to the second node.

6. The method of claim 1, further comprising:
receiving inquiry information from the second node, wherein the inquiry information is used to instruct the first node to report the first power information.

7. The method of claim 6, wherein the inquiry information comprises first information and second information, the first information is used to instruct the first node to report the first power information according to the different transmission parameters, and the second information is used to indicate a reporting mode of the first power information.

8. The method of claim 7, wherein the reporting mode of the first power information comprises at least one of the following:
transmission parameters corresponding to the first power information that is to be reported; or
a reporting order of the first power information that is to be reported in the report information.

9. A power information reporting method, comprising:
receiving, by a second node, report information from a first node, wherein the report information comprises first power information of different transmission parameters, and the first power information comprises at least one of the following: power headroom report, PHR, information or maximum power reduction, MPR, information.

10. The method of claim 9, wherein the different transmission parameters comprise at least one of the following:
different modulation orders, different transmission waveforms, or different resource allocation schemes.

11. The method of claim 9, wherein the different resource allocation schemes are classified according to at least one of the following:
continuity of resource allocation, a number of allocated resources, a position of resource allocation, or a bandwidth size of resource allocation.

12. The method of claim 9, further comprising:
sending inquiry information to the first node, wherein the inquiry information is used to instruct the first node to report the first power information.

13. The method of claim 12, wherein the inquiry information comprises first information and second information, the first information is used to instruct the first node to report the first power information according to the different transmission parameters, and the second information is used to indicate a reporting mode of the first power information.

14. The method of claim 13, wherein the reporting mode of the first power information comprises at least one of the following:
transmission parameters corresponding to the first power information that is to be reported and a reporting order of the first power information that is to be reported in the report information.

15. The method of claim 13, wherein the first information is carried by a medium access control-control element, MAC-CE, downlink control information, DCI, or uplink control information, UCI; and the second information is carried by radio resource control, RRC, or a MAC-CE.

16. A power information reporting apparatus, comprising:
a sending module configured to send report information to a second node, wherein the report information comprises first power information of different transmission parameters, and the first power information comprises at least one of the following: power headroom report, PHR, information or maximum power reduction, MPR, information.

17. A power information reporting apparatus, comprising:
a receiving module configured to receive report information from a first node, wherein the report information comprises first power information of different transmission parameters, and the first power information comprises at least one of the following: power headroom report, PHR, information or maximum power reduction, MPR, information.

18. A communication node, comprising a memory and a processor, wherein the memory is configured to store a computer program which, when executed by the processor, causes the processor to perform the method of any one of claims 1 to 15.

19. A storage medium storing a computer program which, when executed by a processor, causes the processor to perform the method of any one of claims 1 to 15.
